# FASCICULE DE BREVET EUROPEEN

(11) **EP 4 187 392 B1**
(45) Date de publication et mention de la délivrance du brevet: **14.10.2026**
(21) Numéro de dépôt: 22207121.9
(22) Date de dépôt: 14.11.2022
(51) Int. Cl.: G06F 12/14, G06F 21/53, G06F 21/74

(54) **PROCÉDÉ DE GESTION D'UNE MÉMOIRE AU SEIN D'UN SYSTÈME SUR PUCE**
VERFAHREN ZUR VERWALTUNG EINES SPEICHERS IN EINEM SYSTEM AUF EINEM CHIP
METHOD FOR MANAGING A MEMORY WITHIN A SYSTEM ON CHIP

(30) Priorité: 25.11.2021 FR 2112499
(43) Date de publication de la demande: 31.05.2023
(73) Titulaire: STMicroelectronics (Grand Ouest) SAS, 72100 Le Mans (FR)
(72) Inventeur: PALLARDY, Loic, 72700 Rouillon (FR); JAOUEN, Michel, 72530 Yvré-l'Évêque (FR)
(74) Mandataire: Casalonga

(56) Documents cités:
- WO-A1-2017/019061
- FR-A1- 3 090 923
- US-A1- 2020 110 713

## Description

Des modes de réalisation et de mise en œuvre concernent les systèmes sur puce intégrant un ou plusieurs processeurs communiquant avec une mémoire, en particulier la gestion de la mémoire par un dispositif de pare-feu.

Les pares-feux sont typiquement prévus pour des raisons de sécurité lorsqu'une ou plusieurs applications de contextes d'exécution logicielle différents, et éventuellement de processeurs différents, doivent accéder à une même mémoire du système sur puce, par exemple la mémoire dans laquelle est stocké un système logiciel.

A cet égard, chaque application dispose d'un niveau de droit d'accès, permettant de définir l'autorisation ou non d'accéder à une région mémoire de la mémoire, par l'intermédiaire du pare-feu. Le niveau de droit d'accès d'une application provient typiquement du contexte d'exécution duquel elle est issue.

Par exemple, un système logiciel peut prévoir un contexte d'exécution de niveau de droit d'accès « sécurisé » (usuellement nommé en anglais « Secure OS ») et un contexte d'exécution applicatif, de niveau de droit d'accès « non-sécurisé » (usuellement nommé en anglais « Rich OS »).

Le pare-feu est classiquement prévu pour d'une part attribuer, sur commande du contexte d'exécution logicielle de niveau de droit d'accès « sécurisé », les différentes régions mémoires à des contexte d'exécutions respectifs (correspondant chacun à un niveau de droit d'accès) ; et d'autre part pour filtrer, c'est-à-dire autoriser ou non, les requêtes d'accès aux différentes régions mémoire en fonction du niveau de droit d'accès desdites requêtes.

Le pare-feu est typiquement configuré lors de l'initialisation du système de manière à définir les accès aux régions mémoire pour les différents contextes d'exécution du système. FR 3 090 923 A1 divulgue un procédé de gestion de transferts sécurisés de données depuis ou à destination de mémoires sur carte à puce équipée d'un pare-feu de mémoire définissant les règles pertinentes d'accès mémoire appliquée à une politique de filtrage des accès mémoire. US 2020/110713 A1 décrit un procédé configuré pour définir une zone de mémoire sécurisée et une zone de mémoire non-sécurisée et y affecter une variable de protection qui spécifie les conditions d'accès pour accéder aux zones de mémoire sécurisée et non-sécurisée.

Une région mémoire peut être attribuée exclusivement à un contexte d'exécution ou partagée entre plusieurs contextes d'exécution.

Néanmoins, le nombre d'applications pour un contexte d'exécution logicielle peut être élevé de sorte que l'espace de stockage de la mémoire n'est pas suffisant pour stocker l'intégralité des données applicatives. La mémoire devient alors une ressource critique, en particulier sur un système embarqué pour lequel il n'est pas possible de changer matériellement la mémoire pendant la durée de vie du système.

Pour une meilleure efficacité, une région mémoire peut être associée à différents contextes d'exécution pendant le fonctionnement du système en fonction des applications exécutées.

Ainsi, une reprogrammation du pare-feu est possible afin de reconfigurer les droits d'accès aux régions mémoires, après l'initialisation du système, durant l'exécution du système logiciel et des applications.

Par exemple, une fonction d'affichage sécurisé avec rotation matérielle de l'image consomme deux régions mémoires sécurisées en tampon, l'une contenant une trame de l'image sécurisée à afficher au-dessus de la trame d'image non sécurisée, l'autre contenant une trame de l'image résultant de la rotation qui doit également être sécurisée.

Dans le cas d'une image haute résolution, chaque région mémoire en tampon peut avoir une taille importante, par exemple 8MB pour une résolution de 1080p.

Lorsque l'affichage sécurisé n'est pas activé, les régions mémoire sont typiquement attribuées au contexte d'exécution de niveau de droit d'accès non-sécurisés du système logiciel (« Rich OS »), pour être utilisées comme cache ou par une autre application.

Lorsque l'affichage sécurisé est activé, les régions mémoires sont récupérées par le contexte d'exécution de niveau de droit d'accès sécurisé du système logiciel (« Secure OS »), et le pare-feu est reconfiguré pour modifier les droits d'accès desdites régions mémoires. Et, lorsque l'affichage sécurisé est désactivé, la séquence inverse doit être opérée.

Mais en outre, avant de rendre les régions mémoires au contexte d'exécution de niveau de droit d'accès non-sécurisé du système logiciel (« Rich OS »), les contenus des régions mémoires doit être effacé pour éviter une évasion des données.

Cette opération est sous le contrôle du contexte d'exécution de niveau de droit d'accès sécurisé du système logiciel (« Secure OS »), et si un pirate réussit à contourner cette opération ou si un programmeur tiers ne prévoit pas sa mise en œuvre, le contenu des régions mémoires sécurisées deviendra visible par le contexte d'exécution non-sécurisé.

En d'autres termes, l'effacement sécurisé des régions mémoires est sous la responsabilité d'une fonctionnalité logicielle, qui devrait être mise en œuvre par le contexte d'exécution sécurisé du système logiciel, mais l'utilisation de cette fonctionnalité est sous la responsabilité de l'application logicielle car elle dépend de l'usage des régions mémoires.

Par conséquent, étant donné que cette technique est basée sur une mise en œuvre logicielle et qu'elle dépend de l'application qui en cause le besoin, cette technique n'est pas fiable à 100%.

Ainsi, il existe un besoin de proposer des solutions à ce problème ne subissant pas ces inconvénients.

Des modes de mise en œuvre et de réalisation proposent une technique de gestion d'une mémoire au sein d'un système sur puce permettant d'améliorer la sécurité du système de façon simple, absolument fiable, et sans complexifier ou ralentir le système logiciel.

Selon un aspect, il est proposé un procédé de gestion d'une mémoire au sein d'un système sur puce comportant au moins un processeur, une mémoire et un dispositif de pare-feu.

Ledit au moins un processeur est configuré pour générer des requêtes d'accès à la mémoire ayant chacune un niveau de droit d'accès respectif. La mémoire comporte des régions mémoires dédiées à des niveaux de droits d'accès respectifs et au moins l'une des régions mémoire étant dédiée à un niveau de droit d'accès pouvant être modifié par le processeur.

Et le dispositif de pare-feu est configuré pour contrôler les accès aux régions mémoire en fonction du niveau de droit d'accès des requêtes et du niveau de droit auquel est dédiée la région mémoire respective.

Le procédé comprend, en cas de modification du niveau de droit d'accès auquel est dédié une région mémoire, un effacement de la région mémoire mis en œuvre matériellement par le dispositif de pare-feu.

Les régions mémoires correspondent à une organisation logicielle d'une mémoire en plusieurs zones de stockage de données dont le niveau de droit d'accès est défini et géré par le dispositif de pare-feu.

Le niveau de droit d'accès de la requête peut correspondre par exemple au niveau de droit d'accès d'un contexte d'exécution logicielle d'un système logiciel ou par exemple à un niveau de droit d'accès attribué à un processeur parmi plusieurs processeurs pouvant utiliser la mémoire.

Par exemple, la mémoire peut être une mémoire externe ou interne au système sur puce, du type mémoire vive (telle qu'une mémoire « RAM » pour « Random Access Memory ») ou du type non-volatile (telle qu'une mémoire « Flash »).

Une modification du niveau de droit d'accès signifie que le dispositif de pare-feu est reprogrammé pour reconfigurer les conditions d'accès à une ou plusieurs régions mémoire.

Par « effacement mis en œuvre matériellement », on entend que le dispositif de pare-feu est fabriqué de sorte à toujours mettre en œuvre ledit effacement dans des conditions définies à la conception du circuit. Cela se distingue d'une mise en œuvre logicielle par exemple contrôlée par un programme exécuté par le système logiciel.

En d'autres termes, la mise en œuvre matérielle de l'effacement selon cet aspect permet de s'affranchir totalement du risque d'évasion de données, causé par un piratage ou par une erreur.

Selon un mode de mise en œuvre, le dispositif de pare-feu comprend, pour chaque région mémoire, un attribut représentatif du niveau de droit d'accès de la région mémoire correspondante, et est configuré pour contrôler les accès aux régions mémoire en comparant le niveau de droit d'accès des requêtes avec l'attribut de la région mémoire respective.

Le procédé comprend, en outre, en cas de modification du niveau de droit d'accès auquel est dédiée la région mémoire par ledit au moins processeur, une modification de l'attribut de la région mémoire après ledit effacement de la région mémoire mis en œuvre matériellement par le dispositif de pare-feu.

La modification de l'attribut signifie que le dispositif de pare-feu redéfinit l'accès à la région mémoire selon le niveau de droit d'accès auquel est dédiée cette région mémoire dans le dispositif de pare-feu.

La région mémoire peut donc être accessible par des applications d'un contexte d'exécution logicielle ayant le niveau d'accès correspondant au niveau redéfini dans le pare-feu dès lors que l'attribut a été modifié.

Par conséquent, on assure un effacement complet de la région mémoire avant la modification de l'attribut de la région mémoire, c'est-à-dire avant de la rendre accessible par des applications d'autres contextes d'exécution logicielle ayant le niveau d'accès correspondant au niveau redéfini dans le pare-feu.

Ainsi, ce mode de réalisation permet d'être sûr qu'il n'existe pas d'éventuelle faille pouvant causer une évasion de données, pendant une phase « transitoire », par exemple au cours de la procédure d'effacement.

Selon un mode de mise en œuvre, le dispositif de pare-feu comporte en outre pour chaque modification de niveau de droit d'accès possible, une étiquette communiquant une condition de mise en œuvre dudit effacement et en cas de modification du niveau de droit d'accès auquel est dédiée la région mémoire, ledit effacement de la région mémoire étant mis en œuvre matériellement par le dispositif de pare-feu de manière commandée par la condition communiquée par l'étiquette correspondante.

L'étiquette peut correspondre à une indication sur un changement de niveau de droit d'accès susceptible ou non de nuire à la sécurité des données contenues dans la région mémoire. Par exemple, une modification d'un premier niveau de droit d'accès hiérarchiquement inférieur vers un deuxième niveau de droit d'accès hiérarchiquement supérieur peut être acceptable sans effacement de la région mémoire. Tandis qu'une modification du deuxième niveau de droit d'accès vers le premier niveau de droit d'accès peut être qualifié de susceptible de nuire à la sécurité des données, et un effacement de la région mémoire doit être effectué.

Par conséquent, la vérification de l'étiquette permet de garantir un effacement de la région mémoire lors des transitions de niveaux de droit d'accès présentant des risques de sécurité et de ne pas ralentir le processus lors des transitions de niveaux de droit d'accès ne présentant pas de risque de sécurité.

Selon un mode de mise en œuvre, le procédé comprend en outre un verrouillage de ladite région mémoire par le dispositif de pare-feu, bloquant les accès à la région mémoire, pendant l'effacement.

Le verrouillage de la région mémoire correspond à une interdiction d'accéder à cette région mémoire, ce qui empêche les applications de tous les contextes d'exécution logicielle de lire ou de modifier les données stockées dans la région mémoire pendant l'effacement.

Cela permet là-encore de s'assurer qu'il n'existe pas de faille pouvant causer une évasion des données par ce biais.

Selon un mode de mise en œuvre, les niveaux de droits d'accès comprennent un niveau sécurisé et un niveau non-sécurisé, ou un niveau privilégié et un niveau non-privilégié, ou des niveaux de droits d'accès respectifs de plusieurs processeurs pouvant accéder à ladite mémoire.

La gestion des droits d'accès de niveau sécurisé et de niveau non-sécurisé permet notamment de donner l'accès et d'empêcher l'accès à une région mémoire pour le stockage de données d'applications mettant en œuvre des fonctions critiques de sécurité, telles que l'affichage sécurisé de mots de passe. La gestion des droits d'accès de niveau privilégié et de niveau non-privilégié permet de donner l'accès et d'empêcher l'accès à une région mémoire pour le stockage de données d'applications mettant en œuvre des fonctions sensibles, telles que des fonctions de démarrage du système logiciel (usuellement « boot » en anglais). Une gestion plus globale des droits d'accès des processeurs permet aussi de donner l'accès et d'empêcher l'accès à une région mémoire pour le stockage de données spécifiques à un ou plusieurs processeurs.

La région mémoire peut donc être accessible par des applications d'un contexte d'exécution logicielle selon les accès configurés dans le dispositif de pare-feu. Dans les systèmes comprenant plusieurs processeurs, l'accès à la région mémoire par chaque processeur peut également être configuré dans le dispositif de pare-feu.

Par exemple, chaque processeur au sein du même système sur puce peut prévoir plusieurs contextes d'exécution logicielle ayant des niveaux de droits d'accès différents. Selon ces niveaux de droits différents, les contextes d'exécution logicielle au sein d'un même processeur peuvent accéder à différentes régions mémoires à condition que ce processeur ait lui-même accès à ces régions mémoires.

Selon un mode de mise en œuvre, la mémoire comprend en outre un contrôleur de mémoire configuré pour effacer au moins l'une des régions mémoire de la mémoire, et l'effacement de ladite région mémoire comprend une transmission d'une commande d'effacement par le dispositif de pare-feu au contrôleur de mémoire.

Un contrôleur de mémoire est un circuit typiquement intégré à la mémoire, permettant notamment de recevoir et traiter des signaux de commande dans un protocole de communication donnée, et de mettre en œuvre dans la mémoire les actions commandées, telles qu'une lecture, une écriture ou un effacement de données.

Selon un mode de mise en œuvre, l'effacement de ladite région mémoire comprend une transmission par le dispositif de pare-feu d'une salve de données d'effacement dans ladite région mémoire sur un bus d'accès direct en mémoire.

En d'autres termes, lorsque la mémoire est accessible par un bus d'accès direct en mémoire (usuellement « DMA » pour « Direct Memory Access » en anglais) le dispositif de pare feu peut être avantageusement configuré pour exécuter directement l'effacement des données dans la mémoire.

Selon un autre aspect, il est également proposé un système sur puce, comportant au moins un processeur, une mémoire et un dispositif de pare-feu, ledit au moins un processeur étant configuré pour générer des requêtes d'accès à la mémoire ayant chacune un niveau de droit d'accès respectif, la mémoire comportant des régions mémoires dédiées à des niveaux de droits d'accès respectifs et au moins l'une des régions mémoire étant dédiée à un niveau de droit d'accès pouvant être modifié par le processeur, le dispositif de pare-feu étant configuré pour contrôler les accès aux régions mémoire en fonction du niveau de droit d'accès des requêtes et du niveau de droit auquel est dédiée la région mémoire respective,

Le dispositif de pare-feu est matériellement configuré, en cas de modification du niveau de droit d'accès auquel est dédié une région mémoire, pour effacer la région mémoire.

Selon un mode de réalisation, le dispositif de pare-feu comprend, pour chaque région mémoire, un attribut représentatif du niveau de droit d'accès de la région mémoire correspondante, et est configuré pour contrôler les accès aux régions mémoire en comparant le niveau de droit d'accès des requêtes avec l'attribut de la région mémoire respective, le dispositif de pare-feu étant configuré, en cas de modification du niveau de droit d'accès auquel est dédiée la région mémoire, pour modifier l'attribut de la région mémoire après l'effacement de la région mémoire par le dispositif de pare-feu.

Selon un mode de réalisation, le dispositif de pare-feu comporte en outre pour chaque modification de niveau de droit d'accès possible, une étiquette communiquant une condition de mise en œuvre dudit effacement, et, en cas de modification du niveau de droit d'accès auquel est dédiée la région mémoire, le dispositif de pare-feu est configuré pour mettre en œuvre ledit effacement de la région mémoire de manière commandée par la condition communiquée par l'étiquette correspondante.

Selon un mode de réalisation, le dispositif de pare-feu est en outre configuré pour verrouiller la région mémoire, bloquant les accès à la région mémoire, pendant l'effacement.

Selon un mode de réalisation, lesdits niveaux de droits d'accès comprennent un niveau sécurisé et un niveau non-sécurisé, ou un niveau privilégié et un niveau non-privilégié, ou des niveaux de droits d'accès respectifs de plusieurs processeurs pouvant accéder à ladite mémoire.

Selon un mode de réalisation, la mémoire comprend en outre un contrôleur de mémoire configuré pour effacer au moins l'une des régions mémoire de la mémoire, et le dispositif de pare-feu est en outre configuré pour transmettre une commande d'effacement au contrôleur de mémoire pour effacer la région mémoire.

Selon un mode de réalisation, le dispositif de pare-feu est en outre configuré pour transmettre une salve de données d'effacement dans la région mémoire sur un bus d'accès direct en mémoire pour effacer la région mémoire.

D'autres avantages et caractéristiques de l'invention apparaîtront à l'examen de la description détaillée de modes de réalisation et de mise en œuvre, nullement limitatifs, et des dessins annexés, sur lesquels :
[Fig 1]
[Fig 2]
[Fig 3]
[Fig 4]
[Fig 5]

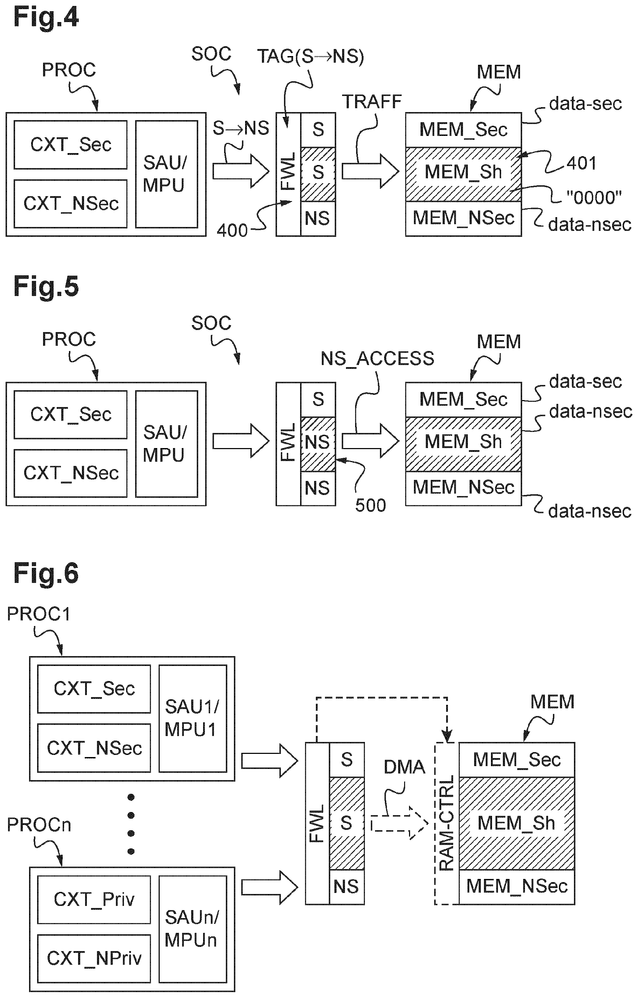

[Fig 6] illustrent schématiquement des modes de réalisation et de mise en œuvre de l'invention.

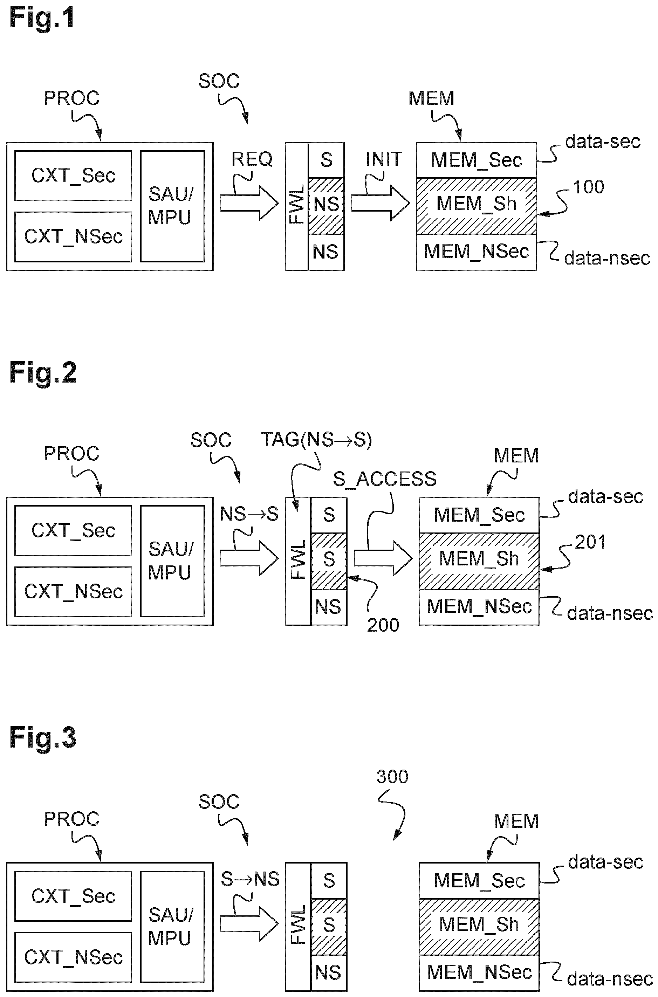

La figure 1 illustre un système sur puce SOC, configuré pour fonctionner avec un système logiciel, lors d'une étape 100 d'initialisation du système logiciel.

Le système sur puce SOC comporte une mémoire MEM dans laquelle est stocké par exemple le code programme du système logiciel, un dispositif de pare-feu FWL et un processeur PROC. Le système logiciel prévoit des contextes d'exécution logicielle de différents niveaux de droit d'accès et, pour chacun de ces contextes d'exécution logicielle, des applications. Les applications sont plus particulièrement issues d'un contexte d'exécution logicielle et héritent de son niveau de droit d'accès.

Le système logiciel peut prévoir, par exemple, un contexte d'exécution de niveau de droit d'accès « sécurisé » CXT_Sec (usuellement nommé en anglais « Secure OS ») et un contexte d'exécution applicatif CXT_NSec, de niveau de droit d'accès « non-sécurisé » (usuellement nommé en anglais « Rich OS »). Par la suite et pour des raisons de simplification, on pourra utiliser les termes « contexte sécurisé » et « contexte non-sécurisé » pour faire référence respectivement à un contexte d'exécution logicielle de niveau de droit d'accès sécurisé Sec et à celui de niveau de droit d'accès non-sécurisé NSec.

Le processeur PROC comprend une unité de gestion des droits d'accès SAU/MPU, et peut exécuter les applications des différents contextes d'exécution logicielle, par exemple les applications des contextes sécurisé CXT_Sec et non-sécurisé CXT_NSec.

En particulier, dans un système sur puce SOC relativement simple, l'unité de gestion des droits d'accès SAU/MPU comprend typiquement une unité de protection mémoire « MPU » (pour « Memory Protection Unit » en anglais) adaptée pour la gestion les niveaux de droit d'accès privilégié Priv et non-privilégié Npriv.

Par ailleurs, l'unité de gestion des droits d'accès peut comprendre une unité d'attribution de sécurité « SAU » (pour « Secure Attribution Unit » en anglais) adaptée pour la gestion des niveaux de droit d'accès sécurisé Sec ou non-sécurisé NSec, en plus de l'unité de protection mémoire MPU. En alternative, pour un système sur puce plus complexe, notamment capable de gérer des adresses virtuelles, l'unité de gestion des droits d'accès (référencée SAU/MPU sur les figures) peut comprendre une unité de gestion mémoire « MMU » (usuellement en anglais « Memory Management Unit ») adaptée pour la gestion des niveaux de droits d'accès privilégié Priv, non-privilégié Npriv, sécurisé Sec et non-sécurisé NSec et la gestion des adresses virtuelles.

Les droits d'accès sécurisé Sec et non-sécurisé NSec correspondent typiquement à une séparation physique d'éléments matériels du processeur PROC de niveau sécurisé et de niveau non-sécurisé.

Les applications du contexte sécurisé CXT_Sec sont généralement prévues pour mettre en œuvre des fonctions critiques de sécurité par l'intermédiaire des éléments matériels sécurisés du processeur PROC. On peut citer à titre d'exemple la fonction d'affichage sécurisé de données sensibles sur un écran.

Les applications du contexte non-sécurisé CXT_NSec sont typiquement prévues pour mettre en œuvre des fonctions n'affectant pas la sécurité du système par l'intermédiaire des éléments matériels non-sécurisés du processeur PROC. Ces applications représentent le plus souvent des programmes développés par des tiers, qui par exemple ne disposent pas des droits requis pour manipuler les données sécurisées du système logiciel.

La mémoire MEM comporte des régions mémoires dédiées à des niveaux de droits d'accès respectifs, typiquement attribués lors de l'initialisation du processeur PROC et du système logiciel.

L'unité de gestion des droits d'accès SAU/MPU permet, sur commande du contexte sécurisé du processeur PROC, de définir un niveau de droit d'accès, ici Sec et NSec, des applications exécutées selon les contextes duquel elles sont issues, ainsi que des régions mémoires de la mémoire MEM.

Une région mémoire sécurisée MEM_Sec est dédiée à un niveau de droit d'accès sécurisé Sec et permet de stocker les données sécurisées data-sec des applications du contexte sécurisé CXT_Sec. Une région mémoire non-sécurisée MEM_NSec est dédiée à un niveau de droit d'accès non-sécurisé NSec et permet de stocker les données non-sécurisées data-nsec des applications du contexte non-sécurisé CXT_NSec.

La mémoire MEM comporte en outre une région mémoire « partagée » MEM_Sh qui est dédiée à un niveau de droit d'accès pouvant être modifié par le processeur PROC au cours de son fonctionnement. Ainsi, selon l'usage qui en est fait, la région mémoire MEM_Sh peut être dédiée à un niveau de droit d'accès sécurisé Sec accessible par les applications du contexte sécurisé CXT_Sec, ou être dédiée à un niveau de droit d'accès non-sécurisé NSec accessible par les applications du contexte non-sécurisé CXT_NSec.

Dans le cadre des exécutions d'applications par le processeur PROC, des requêtes REQ d'accès à la mémoire peuvent être générées. Les requêtes REQ d'accès à la mémoire ont chacune un niveau de droit d'accès respectif correspondant au niveau de droit d'accès de l'application exécutée par le processeur PROC.

Le dispositif de pare-feu FWL est configuré pour contrôler les accès aux régions mémoires en fonction du niveau de droit d'accès des requêtes REQ et du niveau de droit d'accès auquel est dédiée la région mémoire respective. Par exemple, le dispositif de pare-feu FWL peut être un périphérique d'entrées/sorties faisant l'interface entre le processeur PROC et la mémoire MEM. Le processeur PROC et la mémoire MEM peuvent communiquer via un bus de données, notamment pour la transmission de requête REQ et de données par l'intermédiaire du dispositif de pare-feu FWL.

En particulier, le dispositif de pare-feu FWL comprend, pour chaque région mémoire, un attribut représentatif du niveau de droit d'accès de la région mémoire correspondante, par exemple des attributs S et NS pour des régions mémoires de niveau de droit d'accès sécurisé Sec et non-sécurisé NSec, respectivement. L'attribut d'une région mémoire permet ainsi au dispositif de pare-feu FWL de comparer le niveau de droit d'accès de la requête REQ avec l'attribut de la région mémoire correspondante, et d'autoriser ou non la requête REQ en fonction de la comparaison.

Le contexte sécurisé CXT_Sec du processeur PROC, éventuellement par l'intermédiaire de l'unité de gestion des droits d'accès SAU/MPU, est en outre capable de transmettre des commandes pour modifier le niveau de droit d'accès auquel est dédiée la région mémoire MEM_Sh dans le dispositif de pare-feu FWL, par exemple via le bus de données.

En conséquence, une modification par exemple du niveau de droit d'accès sécurisé Sec vers le niveau de droit d'accès non-sécurisé Nsec peut être considérée comme une transition susceptible de nuire à la sécurité du système, en particulier en matière d'évasion des données stockées dans la région mémoire MEM_Sh. En effet, des données de niveau sécurisé data-sec peuvent éventuellement demeurer dans la région mémoire partagée MEM_Sh après la transition, et ainsi devenir accessible par une application tierce de niveau non-sécurisé.

A cet égard, un effacement de la région mémoire MEM_Sh est mis en œuvre matériellement par le dispositif de pare-feu FWL en cas de modification du niveau de droit d'accès auquel est dédiée la région mémoire MEM_Sh. Ainsi, l'effacement de la région mémoire MEM_Sh lors de la transition est effectué matériellement, de façon inévitable, par le dispositif de pare-feu FWL, et l'évasion des données sécurisées data-sec stockées dans la région mémoire partagée MEM_Sh est impossible par ce biais.

Avantageusement, le dispositif de pare-feu FWL comporte une banque d'étiquettes (usuellement « tags » en anglais) labélisant, pour chaque transition possible d'un niveau de droit d'accès à un autre, si la transition est susceptible de nuire à la sécurité du système logiciel. La banque d'étiquettes peut par exemple être prévue à la fabrication du système sur puce SOC en fonction des types de niveaux de droits d'accès pouvant être utilisés par le système sur puce SOC, ou être paramétrée par le contexte d'exécution sécurisé CXT_Sec du processeur PROC par exemple à l'initialisation du système logiciel.

Les étiquettes respectives à chaque transition de niveau de droit d'accès, permettent de communiquer la commande d'effacement, matériellement mis en œuvre par le dispositif de pare-feu FWL, de la région mémoire MEM_Sh dont le niveau de droit d'accès est modifié.

En d'autres termes, l'effacement de la région mémoire MEM_Sh est mis en œuvre matériellement par le dispositif de pare-feu FWL de manière commandée par la condition communiquée par l'étiquette TAG(S->NS) ou TAG(NS->S) respective.

En particulier, dans l'exemple des niveaux de droit d'accès « sécurisé » et « non-sécurisé », deux transitions sont possibles :
- une première transition du niveau de droit d'accès non-sécurisé NSec vers le niveau de droit d'accès sécurisé Sec, ou
- une deuxième transition du niveau de droit d'accès sécurisé Sec vers le niveau de droit d'accès non-sécurisé NSec.

L'une ou l'autre ou les deux desdites transitions peuvent être considérées comme susceptibles de nuire à la sécurité du système logiciel.

Ainsi, une première étiquettes TAG(S->NS) est associée à la première transition, et une deuxième étiquette TAG(NS->S) est associée à la deuxième transition. La première étiquette TAG(S->NS) et la deuxième étiquette TAG(NS->S) communiquent une condition de mise en œuvre de l'effacement en cas de commande d'une modification des niveaux de droits d'accès de la région mémoire correspondant à la transition respective.

L'étape 100 d'initialisation représente l'étape dans laquelle sont configurés les accès aux régions mémoires, dans le dispositif de pare-feu FWL. Lors de cette étape, le contexte sécurisé CXT_Sec du processeur PROC transmet une commande au dispositif de pare-feu FWL pour définir le niveau de droit d'accès de la région mémoire MEM_Sh.

Le choix du niveau de droit d'accès à définir pour la région mémoire « partagée » MEM_Sh peut tenir compte de plusieurs facteurs, tels que le besoin en ressource mémoire des applications des contextes sécurisé CXT_Sec et non-sécurisé CXT_NSec et le fait que certaines de ces ressources ne peuvent être accessibles qu'à un contexte d'exécution logicielle à la fois. Il est également important d'envisager ce besoin en ressource après l'étape d'initialisation, notamment lorsque des applications de chaque contexte génèrent une requête REQ pour la première fois, afin de déterminer un espace de stockage adapté à chaque contexte d'exécution logicielle.

De préférence, il est donc prévu que le niveau de droit d'accès auquel est dédié la région mémoire MEM_Sh soit défini en non-sécurisé NSec. La région mémoire MEM_Sh permet donc d'augmenter l'espace de stockage alloué aux applications du contexte non-sécurisé CXT_NSec qui nécessitent typiquement plus de ressources mémoires, en particulier lors de l'exécution de certaines fonctions telles que les affichages d'images.

On se réfère désormais à la figure 2.

La figure 2 illustre le système sur puce SOC décrit précédemment en relation avec la figure 1, lors d'une étape 200 de modification des droits d'accès de la région mémoire partagée MEM_Sh, et, lors d'une étape 201 d'identification d'une étiquette TAG(NS->S) et de stockage de données sécurisées data-sec.

Une application du contexte sécurisé CXT_Sec souhaite lancer une fonction d'affichage sécurisé avec rotation d'une image sécurisée. Ce type de fonction consomme en pratique une première région mémoire sécurisée pour l'affichage de l'image sécurisée et une deuxième région mémoire sécurisée pour la rotation de cette image. Dans le cas d'une image haute résolution, chaque région mémoire a une taille importante, par exemple 8MB pour une résolution de 1080p. On considère dans cet exemple que la région mémoire sécurisée MEM_Sec ne dispose pas d'espace suffisant à elle seule pour le stockage des données de cette fonction.

A l'étape 200, le système sur puce SOC va allouer la région mémoire partagée MEM_Sh au contexte sécurisé CXT_Sec du processeur PROC, « NS->S ». Le contexte non-sécurisé CXT_NSec libère l'usage de la région mémoire partagée MEM_Sh, et le contexte sécurisé CXT_Sec reconfigure le dispositif de pare-feu FWL de sorte que la région mémoire partagée MEM_Sh est dédiée au niveau de droit d'accès sécurisé Sec.

A l'étape 201 optionnelle, le dispositif de pare-feu FWL identifie une étiquette TAG(NS->S) associée à la transition du niveau de droit d'accès de la région mémoire MEM_Sh. L'étiquette TAG(NS->S) indique par exemple qu'aucun effacement est nécessaire pour cette transition, ce qui permet au dispositif de pare-feu FWL de reconfigurer immédiatement l'accès de la région mémoire MEM_Sh en lui affectant l'attribut S.

Le contexte sécurisé CXT_Sec du processeur PROC peut accéder S_ACCESS à la mémoire MEM par l'intermédiaire du dispositif de pare-feu FWL. Ainsi, les applications du contexte sécurisé CXT_Sec peuvent stocker des données sécurisées data-sec dans la région mémoire MEM_Sh telles que des données d'affichage des trames sécurisé résultant de la rotation de l'image.

La figure 3 illustre le système sur puce SOC décrit précédemment en relation avec la figure 2, lors d'une étape 300, une fois que l'exécution de la fonction d'affichage d'image sécurisé est terminée. La région mémoire MEM_Sh peut être libérée par le contexte sécurisé CXT_Sec et être remise à disposition du contexte non-sécurisé CXT_NSec.

Le contexte sécurisé CXT_Sec du processeur PROC génère à cet égard une commande « S->NS » pour définir, dans le dispositif de pare-feu FWL, un niveau de droit d'accès non-sécurisé NSec pour la région mémoire MEM_Sh.

La figure 4 illustre le système sur puce SOC décrit précédemment en relation avec la figure 3, lors d'une étape 400 d'identification d'étiquette TAG(S->NS), et lors d'une étape 401 d'effacement de la région mémoire MEM_Sh.

A l'étape 400, le dispositif de pare-feu FWL identifie une étiquette TAG(S->NS) associée à la transition du niveau de droit d'accès de la région mémoire MEM_Sh. L'étiquette TAG(S->NS) indique par exemple au dispositif de pare-feu FWL que cette transition est susceptible de nuire à la sécurité du système et communique donc une commande d'effacement de la région mémoire MEM_Sh.

A l'étape 401, l'effacement de la région mémoire MEM_Sh est matériellement mis en œuvre par le dispositif de pare-feu FWL et permet de remplacer les données sécurisées data-sec stockées dans la région mémoire MEM_Sh par d'autres données d'effacement TRAFF selon un modèle définit. Ces données d'effacement TRAFF peuvent être des données codées sur un nombre n de bits correspondant à la taille de la région mémoire, de valeur 0 ou bien de valeur arbitraire.

Par ailleurs, le dispositif de pare-feu FWL peut avantageusement verrouiller la région mémoire MEM_Sh pendant l'effacement. Le dispositif de pare-feu FWL bloque alors par exemple tous les accès à la région mémoire MEM_Sh, quel que soit le niveau de droit d'accès des requêtes REQ d'accès à la mémoire MEM.

La figure 5 illustre le système sur puce SOC décrit précédemment en relation avec la figure 4, lors d'une étape 500, après la fin de l'effacement de la région mémoire partagée MEM_Sh, dans laquelle l'attribut S, NS est effectivement modifié dans le dispositif de pare-feu FWL. L'étape 500 finalise le processus de modification des droits d'accès de la région mémoire partagée MEM_Sh, en réponse à la commande d'allocation de ladite région au contexte sécurisé CXT_Sec. L'état du système sur puce SOC à l'étape 500 correspond à l'état du système sur puce SOC à l'étape d'initialisation 100.

La figure 6 illustre des exemples d'alternatives du système sur puce SOC décrit précédemment en relation avec les figures 1 à 4. D'une part, plusieurs processeurs PROC1 à PROCn peuvent communiquer avec la mémoire MEM par l'intermédiaire du pare-feu FWL.

Le système sur puce SOC peut prévoir à la fois des droits d'accès de niveaux sécurisé Sec et non-sécurisé NSec, ainsi que, pour chaque domaine matériel de niveau sécurisé et non-sécurisé, des droits d'accès de niveaux privilégié Priv et non-privilégié NPriv. Cependant, des processeurs PROCn peuvent prévoir seulement les niveaux de droit d'accès privilégié Priv ou non-privilégié NPriv. Ainsi, le dispositif de pare-feu FWL peut comprendre en outre des attributs P et NP représentatif des niveaux de droit d'accès privilégié Priv et respectivement non-privilégié NPriv.

Par ailleurs, les différents processeurs PROC1-PROCn peuvent « être propriétaires » de régions mémoire respectives, c'est-à-dire que des régions mémoires sont respectivement dédiées aux différents processeurs, et, le dispositif de pare-feu FWL peut comprendre en outre des attributs (non-représentés) représentatifs des processeurs PROC1-PROCn propriétaires des régions mémoires respectives. On considère que la propriété d'une région mémoire par un processeur PROC-PROCn est aussi un niveau de droit d'accès.

Par exemple, les attributs P-NP (resp. S-NS) mentionnés précédemment peuvent être prévus de manière communiquer à la fois l'information représentative des niveaux de droit d'accès privilégié Priv et non-privilégié NPriv (resp. sécurisé Sec et non-sécurisé NSec) et l'information représentative du processeur PROC1-PROCn propriétaire respectif.

La gestion des droits d'accès est également prévue de sorte qu'une tâche de niveau non-privilégié NPriv ne peut pas accéder à des données ou des fonctions de niveau privilégié Priv. Ces niveaux de droit d'accès privilégié Priv et non-privilégié NPriv permettent notamment de donner l'accès ou respectivement d'empêcher l'accès à une région mémoire pour le stockage de données d'applications mettant en œuvre des fonctions sensibles, telles que des fonctions manipulant les données de démarrage du système logiciel (usuellement « boot » en anglais).

On peut également envisager dans cette alternative un niveau de droit d'accès par processeur pour lequel le dispositif de pare-feu FWL est capable de donner ou empêcher l'accès à la région mémoire MEM_Sh. Dans ce cas, des attributs correspondants aux niveaux de droit d'accès par processeur peuvent être prévus dans le dispositif de pare-feu FWL.

Quels que soient les types de droits d'accès utilisés (sécurisé/non-sécurisé et/ou privilégié/non-privilégié et/ou associés à des processeurs respectifs) le dispositif de pare-feu FWL est matériellement configuré, en cas de modification du niveau de droit d'accès auquel est dédié une région mémoire MEM_Sh, pour effacer la région mémoire MEM_Sh, éventuellement par le biais du mécanisme optionnel et avantageux des étiquettes, pour chaque modification de niveau de droit d'accès possible, communiquant une condition de mise en œuvre dudit effacement.

L'effacement peut, par exemple, être une transmission par le dispositif de pare-feu FWL d'une salve de données d'effacement TRAFF dans la région mémoire MEM_S par un mécanisme d'accès direct en mémoire DMA. Ainsi, les données sécurisées data-sec stockées dans la région mémoire MEM_Sh sont écrasées et effacées.

Dans un autre exemple de mise en œuvre de l'effacement, la mémoire MEM comprend un contrôleur de mémoire MEM_CTRL. Le contrôleur mémoire MEM_CTRL peut être prévu dans la plupart des mémoires vives « RAM » et permettent de recevoir et traiter des signaux de commande dans un protocole de communication donnée, et de mettre en œuvre dans la mémoire MEM les actions commandées, telles qu'une lecture, une écriture ou un effacement de données. Dans ce cas, le dispositif de pare-feu FWL peut alors transmettre une commande au contrôleur de mémoire MEM_CTRL pour effacer la région mémoire MEM_SH.

Par ailleurs, l'invention n'est pas limitée à ces modes de réalisation et de mise en œuvre, mais en embrasse toutes les variantes, par exemple les niveaux de droit d'accès spécifiques « sécurisé » et « non-sécurisé » décrits en relation avec les figures 1 à 5 ont été données à titre d'exemple, et pourraient être remplacés par tout autre type de niveau de droit d'accès, tel que par exemple les niveaux de droit d'accès mentionnés en relation avec la figure 6.

En outre, bien qu'il ait été décrit un mécanisme avantageux utilisant les étiquettes de transition de niveaux de droit d'accès, l'invention pourra prévoir par exemple de matériellement mettre en œuvre l'effacement par le dispositif de pare-feu FWL à chaque fois que les droits d'accès d'une région mémoire sont modifiés.

## Revendications

1. Procédé de gestion d'une mémoire au sein d'un système sur puce (SOC) comportant au moins un processeur (PROC), une mémoire (MEM) et un dispositif de pare-feu (FWL), ledit au moins un processeur (PROC) étant configuré pour générer des requêtes (REQ) d'accès à la mémoire (MEM) ayant chacune un niveau de droit d'accès respectif (Sec, NSec), la mémoire (MEM) comportant des régions mémoires (MEM_Sec, MEM_Sh, MEM_NSec) dédiées à des niveaux de droits d'accès respectifs (Sec, NSec) et au moins l'une des régions mémoire (MEM_Sh) étant dédiée à un niveau de droit d'accès pouvant être modifié par le processeur (PROC), le dispositif de pare-feu (FWL) étant configuré pour contrôler les accès aux régions mémoires (MEM_Sec, MEM_Sh, MEM_NSec) en fonction du niveau de droit d'accès (Sec, NSec) des requêtes (REQ) et du niveau de droit auquel est dédiée la région mémoire respective, le procédé comprenant, en cas de modification du niveau de droit d'accès (S->NS, NS->S) auquel est dédiée une région mémoire (MEM_Sh), un effacement de la région mémoire (MEM_Sh) mis en œuvre matériellement par le dispositif de pare-feu (FWL).

2. Procédé selon la revendication 1, dans lequel le dispositif de pare-feu (FWL) comprend, pour chaque région mémoire (MEM_Sec, MEM_Sh, MEM_NSec), un attribut (S, NS) représentatif du niveau de droit d'accès (Sec, NSec) de la région mémoire correspondante, et est configuré pour contrôler les accès aux régions mémoires (MEM_Sec, MEM_Sh, MEM_NSec) en comparant le niveau de droit d'accès (Sec, NSec) des requêtes (REQ) avec l'attribut (S, NS) de la région mémoire respective, le procédé comprenant en outre, en cas de modification du niveau de droit d'accès (S->NS, NS->S) auquel est dédiée la région mémoire (MEM_Sh), une modification de l'attribut (S, NS) de la région mémoire après ledit effacement de la région mémoire (MEM_Sh) mis en œuvre matériellement par le dispositif de pare-feu (FWL).

3. Procédé selon l'une des revendications 1 ou 2, dans lequel le dispositif de pare-feu (FWL) comporte en outre, pour chaque modification de niveau de droit d'accès possible, une étiquette (TAG(S->NS), TAG(NS->S)) communiquant une condition de mise en œuvre dudit effacement, et, en cas de modification du niveau de droit d'accès (S->NS, NS->S) auquel est dédiée la région mémoire (MEM_Sh), ledit effacement de la région mémoire (MEM_Sh) est mis en œuvre matériellement par le dispositif de pare-feu (FWL) de manière commandée par la condition communiquée par l'étiquette (TAG(S->NS), TAG(NS->S)) correspondante.

4. Procédé selon l'une des revendications précédentes, comprenant en outre un verrouillage de ladite région mémoire (MEM_Sh) par le dispositif de pare-feu (FWL), bloquant les accès à la région mémoire (MEM_Sh), pendant l'effacement.

5. Procédé selon l'une des revendications précédentes, dans lequel les niveaux de droits d'accès comprennent un niveau sécurisé (Sec) et un niveau non-sécurisé (NSec), ou un niveau privilégié (Priv) et un niveau non-privilégié (NPriv), ou des niveaux de droits d'accès respectifs de plusieurs processeurs (PROC) pouvant accéder à ladite mémoire (MEM_Sh).

6. Procédé selon l'une des revendications précédentes, dans lequel la mémoire (MEM) comprend en outre un contrôleur de mémoire (MEM_CTRL) configuré pour effacer au moins l'une des régions mémoire (MEM_Sec, MEM_Sh, MEM_NSec) de la mémoire (MEM), l'effacement de ladite région mémoire (MEM_Sh) comprenant une transmission d'une commande d'effacement par le dispositif de pare-feu (FWL) au contrôleur de mémoire (MEM_CTRL).

7. Procédé selon l'une des revendications précédentes, dans lequel l'effacement de ladite région mémoire (MEM_Sh) comprend une transmission par le dispositif de pare-feu (FWL) d'une salve de données d'effacement (TRAFF) dans ladite région mémoire sur un bus d'accès direct en mémoire (DMA).

8. Système sur puce (SOC), comportant au moins un processeur (PROC), une mémoire (MEM) et un dispositif de pare-feu (FWL), ledit au moins un processeur (PROC) étant configuré pour générer des requêtes (REQ) d'accès à la mémoire (MEM) ayant chacune un niveau de droit d'accès respectif, la mémoire (MEM) comportant des régions mémoires (MEM_Sec, MEM_Sh, MEM_NSec) dédiées à des niveaux de droits d'accès respectifs et au moins l'une des régions mémoire (MEM_Sh) étant dédiée à un niveau de droit d'accès pouvant être modifié par le processeur (PROC), le dispositif de pare-feu (FWL) étant configuré pour contrôler les accès aux régions mémoire (MEM_Sec, MEM_Sh, MEM_NSec) en fonction du niveau de droit d'accès (Sec, NSec) des requêtes (REQ) et du niveau de droit auquel est dédiée la région mémoire respective, dans lequel le dispositif de pare-feu (FWL) est matériellement configuré, en cas de modification du niveau de droit d'accès auquel est dédié une région mémoire (MEM_Sh), pour effacer la région mémoire (MEM_Sh).

9. Système sur puce selon la revendication 8, dans lequel le dispositif de pare-feu (FWL) comprend, pour chaque région mémoire (MEM_Sec, MEM_Sh, MEM_NSec), un attribut (S, NS) représentatif du niveau de droit d'accès de la région mémoire correspondante, et est configuré pour contrôler les accès aux régions mémoires (MEM_Sec, MEM_Sh, MEM_NSec) en comparant le niveau de droit d'accès (Sec, NSec) des requêtes (REQ) avec l'attribut (S, NS) de la région mémoire respective, le dispositif de pare-feu (FWL) étant configuré, en cas de modification du niveau de droit d'accès (S->NS, NS->S) auquel est dédiée la région mémoire (MEM_Sh), pour modifier l'attribut (S, NS) de la région mémoire (MEM_Sh), après l'effacement de la région mémoire (MEM_Sh) par le dispositif de pare-feu (FWL).

10. Système sur puce selon l'une des revendications 8 ou 9, dans lequel le dispositif de pare-feu (FWL) comporte en outre, pour chaque modification de niveau de droit d'accès possible (S->NS, NS->S), une étiquette (TAG(S->NS), TAG(NS->S)) communiquant une condition de mise en œuvre dudit effacement, et, en cas de modification du niveau de droit d'accès (S->NS, NS->S) auquel est dédiée la région mémoire (MEM_Sh), le dispositif de pare-feu (FWL) est configuré pour mettre en œuvre ledit effacement de la région mémoire (MEM_Sh) de manière commandée par la condition communiquée par l'étiquette (TAG(S->NS), TAG(NS->S)) correspondante.

11. Système sur puce selon l'une des revendications 8 à 10, dans lequel le dispositif de pare-feu (FWL) est en outre configuré pour verrouiller la région mémoire (MEM_Sh), bloquant les accès à la région mémoire (MEM_Sh), pendant l'effacement.

12. Système sur puce selon l'une des revendications 8 à 11, dans lequel lesdits niveaux de droits d'accès comprennent un niveau sécurisé (Sec) et un niveau non-sécurisé (NSec), ou un niveau privilégié (Priv) et un niveau non-privilégié (NPriv), ou des niveaux de droits d'accès respectifs de plusieurs processeurs (PROC) pouvant accéder à ladite mémoire (MEM_Sh).

13. Système sur puce selon l'une des revendications 8 à 12, dans lequel la mémoire (MEM) comprend en outre un contrôleur de mémoire (MEM_CTRL) configuré pour effacer au moins l'une des régions mémoire (MEM_Sec, MEM_Sh, MEM_NSec) de la mémoire (MEM), le dispositif de pare-feu (FWL) étant en outre configuré pour transmettre une commande d'effacement au contrôleur de mémoire (MEM_CTRL) pour effacer la région mémoire (MEM_Sh).

14. Système sur puce selon l'une des revendications 8 à 13, dans lequel le dispositif de pare-feu (FWL) est en outre configuré pour transmettre une salve de données d'effacement (TRAFF) dans la région mémoire (MEM_Sh) sur un bus d'accès direct en mémoire (DMA) pour effacer la région mémoire (MEM_Sh).

## Patentansprüche

1. Verfahren zur Verwaltung eines Speichers innerhalb eines Systems auf einem Chip (SOC), das mindestens einen Prozessor (PROC), einen Speicher (MEM) und eine Firewall-Vorrichtung (FWL) beinhaltet, wobei der mindestens eine Prozessor (PROC) konfiguriert ist, um Anfragen (REQ) zum Zugriff auf den Speicher (MEM) zu generieren, die jeweils eine jeweilige Zugriffsberechtigungsebene (Sec, NSec) aufweisen, wobei der Speicher (MEM) Speicherbereiche (MEM_Sec, MEM_Sh, MEM_NSec) beinhaltet, die jeweiligen Zugriffsberechtigungsebenen (Sec, NSec) vorbehalten sind, und mindestens einer der Speicherbereiche (MEM_Sh) einer Zugriffsberechtigungsebene vorbehalten ist, die vom Prozessor (PROC) modifiziert werden kann, wobei die Firewall-Vorrichtung (FWL) konfiguriert ist, um die Zugriffe auf die Speicherbereiche (MEM_Sec, MEM_Sh, MEM_NSec) in Abhängigkeit von der Zugriffsberechtigungsebene (Sec, NSec) der Anfragen (REQ) und der Berechtigungsebene, welcher der jeweilige Speicherbereich vorbehalten ist, zu steuern, wobei das Verfahren im Falle einer Modifikation der Zugriffsberechtigungsebene (S->NS, NS->S), der ein Speicherbereich (MEM_Sh) vorbehalten ist, ein Löschen des Speicherbereichs (MEM_Sh) umfasst, das hardwaremäßig durch die Firewall-Vorrichtung (FWL) durchgeführt wird.

2. Verfahren nach Anspruch 1, wobei die Firewall-Vorrichtung (FWL) für jeden Speicherbereich (MEM_Sec, MEM_Sh, MEM_NSec) ein Attribut (S, NS) umfasst, das repräsentativ für die Zugriffsberechtigungsebene (Sec, NSec) des entsprechenden Speicherbereichs ist, und konfiguriert ist, um die Zugriffe auf die Speicherbereiche (MEM_Sec, MEM_Sh, MEM_NSec) durch Vergleichen der Zugriffsberechtigungsebene (Sec, NSec) der Anfragen (REQ) mit dem Attribut (S, NS) des jeweiligen Speicherbereichs zu steuern, wobei das Verfahren im Falle einer Modifikation der Zugriffsberechtigungsebene (S->NS, NS->S), welcher der Speicherbereich (MEM_Sh) vorbehalten ist, weiter ein Modifizieren des Attributs (S, NS) des Speicherbereichs nach dem hardwaremäßig durch die Firewall-Vorrichtung (FWL) durchgeführten Löschen des Speicherbereichs (MEM_Sh) umfasst.

3. Verfahren nach einem der Ansprüche 1 oder 2, wobei die Firewall-Vorrichtung (FWL) weiter für jede mögliche Modifikation der Zugriffsberechtigungsebene ein Tag (TAG(S->NS), TAG(NS->S)) beinhaltet, das eine Bedingung zur Durchführung des Löschens kommuniziert, und im Falle einer Modifikation der Zugriffsberechtigungsebene (S->NS, NS->S), welcher der Speicherbereich (MEM_Sh) vorbehalten ist, das Löschen des Speicherbereichs (MEM_Sh) hardwaremäßig durch die Firewall-Vorrichtung (FWL) anhand der von dem entsprechenden Tag (TAG(S->NS), TAG(NS->S)) kommunizierten Bedingung gesteuert durchgeführt wird.

4. Verfahren nach einem der vorstehenden Ansprüche, das weiter ein Verriegeln des Speicherbereichs (MEM_Sh) durch die Firewall-Vorrichtung (FWL) während des Löschens umfasst, wodurch die Zugriffe auf den Speicherbereich (MEM_Sh) blockiert werden.

5. Verfahren nach einem der vorstehenden Ansprüche, wobei die Zugriffsberechtigungsebenen eine gesicherte Ebene (Sec) und eine nicht gesicherte Ebene (NSec) oder eine privilegierte Ebene (Priv) und eine nicht privilegierte Ebene (NPriv) oder jeweilige Zugriffsberechtigungsebenen mehrerer Prozessoren (PROC), die auf den Speicher (MEM_Sh) zugreifen können, umfassen.

6. Verfahren nach einem der vorstehenden Ansprüche, wobei der Speicher (MEM) weiter eine Speichersteuerung (MEM_CTRL) umfasst, die so konfiguriert ist, dass sie mindestens einen der Speicherbereiche (MEM_Sec, MEM_Sh, MEM_NSec) des Speichers (MEM) löscht, wobei das Löschen des Speicherbereichs (MEM_Sh) ein Übertragen eines Löschbefehls von der Firewall-Vorrichtung (FWL) an die Speichersteuerung (MEM_CTRL) umfasst.

7. Verfahren nach einem der vorstehenden Ansprüche, wobei das Löschen des Speicherbereichs (MEM_Sh) ein Übertragen eines Löschdaten-Bursts (TRAFF) im Speicherbereich durch die Firewall-Vorrichtung (FWL) auf einem Speicher-Direktzugriffsbus (DMA) umfasst.

8. System auf einem Chip (SOC), das mindestens einen Prozessor (PROC), einen Speicher (MEM) und eine Firewall-Vorrichtung (FWL) beinhaltet, wobei der mindestens eine Prozessor (PROC) konfiguriert ist, um Anfragen (REQ) zum Zugriff auf den Speicher (MEM) zu generieren, die jeweils eine jeweilige Zugriffsberechtigungsebene aufweisen, wobei der Speicher (MEM) Speicherbereiche (MEM_Sec, MEM_Sh, MEM_NSec) beinhaltet, die jeweiligen Zugriffsberechtigungsebenen vorbehalten sind, und mindestens einer der Speicherbereiche (MEM_Sh) einer Zugriffsberechtigungsebene vorbehalten ist, die von dem Prozessor (PROC) modifiziert werden kann, wobei die Firewall-Vorrichtung (FWL) konfiguriert ist, um die Zugriffe auf die Speicherbereiche (MEM_Sec, MEM_Sh, MEM_NSec) in Abhängigkeit von der Zugriffsberechtigungsebene (Sec, NSec) der Anfragen (REQ) und der Berechtigungsebene, welcher der jeweilige Speicherbereich vorbehalten ist, zu steuern, wobei die Firewall-Vorrichtung (FWL) hardwaremäßig im Falle einer Modifikation der Zugriffsberechtigungsebene, der ein Speicherbereich (MEM_Sh) vorbehalten ist, konfiguriert ist, um den Speicherbereich (MEM_Sh) zu löschen.

9. System auf einem Chip nach Anspruch 8, wobei die Firewall-Vorrichtung (FWL) für jeden Speicherbereich (MEM_Sec, MEM_Sh, MEM_NSec) ein Attribut (S, NS) umfasst, das repräsentativ für die Zugriffsberechtigungsebene des entsprechenden Speicherbereichs ist, und konfiguriert ist, um die Zugriffe auf die Speicherbereiche (MEM_Sec, MEM_Sh, MEM_NSec) durch Vergleichen der Zugriffsberechtigungsebene (Sec, NSec) der Anfragen (REQ) mit dem Attribut (S, NS) des jeweiligen Speicherbereichs zu steuern, wobei die Firewall-Vorrichtung (FWL) konfiguriert ist, um im Falle einer Modifikation der Zugriffsberechtigungsebene (S->NS, NS->S), welcher der Speicherbereich (MEM_Sh) vorbehalten ist, nach dem Löschen des Speicherbereichs (MEM_Sh) durch die Firewall-Vorrichtung (FWL) das Attribut (S, NS) des Speicherbereichs (MEM_Sh) zu modifizieren.

10. System auf einem Chip nach einem der Ansprüche 8 oder 9, wobei die Firewall-Vorrichtung (FWL) weiter für jede mögliche Modifikation der Zugriffsberechtigungsebene (S->NS, NS->S) ein Tag (TAG(S->NS), TAG(NS->S)) beinhaltet, das eine Bedingung zur Durchführung des Löschens kommuniziert, und die Firewall-Vorrichtung (FWL) konfiguriert ist, um im Falle einer Modifikation der Zugriffsberechtigungsebene (S->NS, NS->S), welcher der Speicherbereich (MEM_Sh) vorbehalten ist, das Löschen des Speicherbereichs (MEM_Sh) anhand der von dem entsprechenden Tag (TAG(S->NS), TAG(NS->S)) angegebenen Bedingung gesteuert durchzuführen.

11. System auf einem Chip nach einem der Ansprüche 8 bis 10, wobei die Firewall-Vorrichtung (FWL) weiter konfiguriert ist, um während des Löschens den Speicherbereich (MEM_Sh) zu verriegeln, wodurch die Zugriffe auf den Speicherbereich (MEM_Sh) blockiert werden.

12. System auf einem Chip nach einem der Ansprüche 8 bis 11, wobei die Zugriffsberechtigungsebenen eine gesicherte Ebene (Sec) und eine nicht gesicherte Ebene (NSec) oder eine privilegierte Ebene (Priv) und eine nicht privilegierte Ebene (NPriv) oder jeweilige Zugriffsberechtigungsebenen mehrerer Prozessoren (PROC) umfassen, die auf den Speicher (MEM_Sh) zugreifen können.

13. System auf einem Chip nach einem der Ansprüche 8 bis 12, wobei der Speicher (MEM) weiter eine Speichersteuereinheit (MEM_CTRL) umfasst, die konfiguriert ist, um mindestens einen der Speicherbereiche (MEM_Sec, MEM_Sh, MEM_NSec) des Speichers (MEM) zu löschen, wobei die Firewall-Vorrichtung (FWL) weiter konfiguriert ist, um einen Löschbefehl an die Speichersteuereinheit (MEM_CTRL) zu übertragen, um den Speicherbereich (MEM_Sh) zu löschen.

14. System auf einem Chip nach einem der Ansprüche 8 bis 13, wobei die Firewall-Vorrichtung (FWL) weiter konfiguriert ist, um einen Löschdaten-Burst (TRAFF) im Speicherbereich (MEM_Sh) auf einem Speicher-Direktzugriffsbus (DMA) zu übertragen, um den Speicherbereich (MEM_Sh) zu löschen.

## Claims

1. Method for managing a memory within a system on a chip (SoC) including at least one processor (PROC), a memory (MEM) and a firewall device (FWL), said at least one processor (PROC) being configured to generate requests (REQ) for access to the memory (MEM), each having a respective access permission level (Sec, NSec), the memory (MEM) including memory regions (MEM_Sec, MEM_Sh, MEM_NSec) dedicated to respective access permission levels (Sec, NSec), and at least one of the memory regions (MEM_Sh) being dedicated to an access permission level that can be changed by the processor (PROC), the firewall device (FWL) being configured to control access to the memory regions (MEM_Sec, MEM_Sh, MEM_NSec) according to the access permission level (Sec, NSec) of the requests (REQ) and the permission level to which the respective memory region is dedicated, the method comprising, in the event of a change of the access permission level (S->NS, NS->S) to which a memory region (MEM_Sh) is dedicated, an erasure of the memory region (MEM_Sh) performed at the hardware level by the firewall device (FWL).

2. Method according to claim 1, wherein the firewall device (FWL) comprises, for each memory region (MEM_Sec, MEM_Sh, MEM_NSec), an attribute (S, NS) representative of the access permission level (Sec, NSec) of the corresponding memory region, and is configured to control access to the memory regions (MEM_Sec, MEM_Sh, MEM_NSec) by comparing the access permission level (Sec, NSec) of the requests (REQ) with the attribute (S, NS) of the respective memory region, the method further comprising, in the event of a change in the access permission level (S->NS, NS->S) to which the memory region (MEM_Sh) is dedicated, a change of the attribute (S, NS) of the memory region after said erasure of the memory region (MEM_Sh) performed at the hardware level by the firewall device (FWL).

3. Method according to any one of claims 1 or 2, wherein the firewall device (FWL) further includes, for each possible change of access permission level, a tag (TAG(S->NS), TAG(NS->S)) indicating a condition for performing said erasure, and, in the event of a change in the access permission level (S->NS, NS->S) to which the memory region (MEM_Sh) is dedicated, said erasure of the memory region (MEM_Sh) is performed at the hardware level by the firewall device (FWL) in a manner controlled by the condition indicated by the corresponding tag (TAG(S->NS), TAG(NS->S)).

4. Method according to any one of the preceding claims, further comprising the firewall device (FWL) locking said memory region (MEM_Sh), thereby blocking access to the memory region (MEM_Sh), during the erasure.

5. Method according to any one of the preceding claims, wherein the access permission levels comprise a secure level (Sec) and a non-secure level (NSec), or a privileged level (Priv) and a non-privileged level (NPriv), or respective access permission levels of multiple processors (PROC) that can access said memory (MEM_Sh).

6. Method according to any one of the preceding claims, wherein the memory (MEM) further comprises a memory controller (MEM_CTRL) configured to erase at least one of the memory regions (MEM_Sec, MEM_Sh, MEM_NSec) from the memory (MEM), wherein erasing said memory region (MEM_Sh) comprises the firewall device (FWL) transmitting an erase command to the memory controller (MEM_CTRL).

7. Method according to one of the preceding claims, wherein the erasure of said memory region (MEM_Sh) comprises the firewall device (FWL) transmitting a burst of erasure data (TRAFF) to said memory region over a direct memory access (DMA) bus.

8. System on a chip (SoC), including at least one processor (PROC), a memory (MEM) and a firewall device (FWL), said at least one processor (PROC) being configured to generate requests (REQ) for access to the memory (MEM), each having a respective access permission level, the memory (MEM) including memory regions (MEM_Sec, MEM_Sh, MEM_NSec) dedicated to respective access permission levels, and at least one of the memory regions (MEM_Sh) being dedicated to an access permission level that can be changed by the processor (PROC), the firewall device (FWL) being configured to control access to the memory regions (MEM_Sec, MEM_Sh, MEM_NSec) based on the access permission level (Sec, NSec) of the requests (REQ) and the permission level to which the respective memory region is dedicated, wherein the firewall device (FWL) is configured at the hardware level, in the event of a change to the access permission level to which a memory region (MEM_Sh) is dedicated, to erase the memory region (MEM_Sh).

9. System on a chip according to claim 8, wherein the firewall device (FWL) comprises, for each memory region (MEM_Sec, MEM_Sh, MEM_NSec), an attribute (S, NS) representative of the access permission level of the corresponding memory region, and is configured to control access to the memory regions (MEM_Sec, MEM_Sh, MEM_NSec) by comparing the access permission level (Sec, NSec) of the requests (REQ) with the attribute (S, NS) of the respective memory region, the firewall device (FWL) being configured, in the event of a change of the access permission level (S->NS, NS->S) to which the memory region (MEM_Sh) is dedicated, to change the attribute (S, NS) of the memory region (MEM_Sh), after the memory region (MEM_Sh) has been erased by the firewall device (FWL).

10. System on a chip according to any one of claims 8 or 9, wherein the firewall device (FWL) further includes, for each possible change in access permission level (S->NS, NS->S), a tag (TAG(S->NS), TAG(NS->S)) indicating a condition for performing said erasure, and, in the event of a change in the access permission level (S->NS, NS->S) to which the memory region (MEM_Sh) is dedicated, the firewall device (FWL) is configured to perform said erasure of the memory region (MEM_Sh) in a manner controlled by the condition indicated by the corresponding tag (TAG(S->NS), TAG(NS->S)).

11. System on a chip according to any one of claims 8 to 10, wherein the firewall device (FWL) is further configured to lock the memory region (MEM_Sh), thereby blocking access to the memory region (MEM_Sh), during the erasure.

12. System on a chip according to any one of claims 8 to 11, wherein said access permission levels comprise a secure level (Sec) and a non-secure level (NSec), or a privileged level (Priv) and a non-privileged level (NPriv), or respective access permission levels of multiple processors (PROC) that can access said memory (MEM_Sh).

13. System on a chip according to any one of claims 8 to 12, wherein the memory (MEM) further comprises a memory controller (MEM_CTRL) configured to erase at least one of the memory regions (MEM_Sec, MEM_Sh, MEM_NSec) from the memory (MEM), the firewall device (FWL) being further configured to transmit an erase command to the memory controller (MEM_CTRL) to erase the memory region (MEM_Sh).

14. System on a chip according to any one of claims 8 to 13, wherein the firewall device (FWL) is further configured to transmit a burst of erasure data (TRAFF) to the memory region (MEM_Sh) over a direct memory access (DMA) bus to erase the memory region (MEM_Sh).
